# DEMANDE DE BREVET EUROPEEN

(11) **EP 1 473 852 A1**
(43) Date de publication de la demande: **03.11.2004**
(21) Numéro de dépôt: 04291019.0
(22) Date de dépôt: 16.04.2004
(51) Int. Cl.: H04B 7/185, H04L 29/06

(54) **Dispositif de traitement d'entêtes de paquets de données au sein d'un réseau de communications par satellite**

(30) Priorité: 30.04.2003 FR 0305301
(71) Demandeur: ALCATEL, 75008 Paris (FR)
(72) Inventeur: Zein Al-Abedeen, Tarif, 31320 Castanet (FR); Duquerroy, Laurence, 31400 Toulouse (FR); Combes, Stéphane, 31400 Toulouse (FR)
(74) Mandataire: Hedarchet, Stéphane

(57) **Abrégé**

Un dispositif (D) est dédié au traitement de trames de données pour des terminaux satellite (ST) d'un réseau de communications par satellite, raccordés à au moins un bus logique (B) défini dans une liaison satellite. Ce dispositif (D) comporte des moyens de traitement (MT) chargés, lorsqu'ils reçoivent des paquets d'une trame de données provenant d'un premier équipement de communication (UE11) raccordé à un premier terminal satellite (ST1) couplé au dispositif (D), et destinée à un second équipement (UE2) de communication raccordé à un second terminal satellite (ST2), d'encapsuler chaque paquet reçu dans un entête de protocole de transmission de niveau deux (dans le modèle en couche OSI), comprenant au moins l'identifiant du bus auquel est raccordé le second terminal satellite (ST2) et l'identifiant de communication du premier terminal satellite (ST1), avant qu'il soit transmis au satellite (SAT), via la liaison.

## Description

L'invention concerne le domaine des communications entre équipements de communication d'un réseau de communications par satellite, et plus particulièrement le transfert de trames de paquets de données entre équipements de communication raccordés à des terminaux satellite.

On entend ici par « équipement de communication », tout équipement de réseau, et notamment les équipements d'utilisateurs, tels que les ordinateurs fixes ou portables ou les téléphones portables, les routeurs, les serveurs ou les passerelles (ou « gateways »).

Comme le sait l'homme de l'art, le transfert de données entre équipements de communication d'un réseau de communications par satellite s'effectue généralement selon un mode dit connecté, comme par exemple le mode de transfert asynchrone (ou ATM pour « Asynchronous Transfer Mode »). Ce transfert s'effectue par l'intermédiaire des terminaux satellite auxquels sont raccordés les équipements de communication.

Du fait de ce mode de transfert, des équipements de communication distants ne peuvent échanger des données (ou trafic) qu'une fois qu'une connexion physique ou logique, par exemple une connexion par canal virtuel ATM (ou VCC ATM pour « Virtual Channel Connection ATM ») a été établie entre eux. Une telle connexion peut servir à tout type de service, comme par exemple une interconnexion entre réseaux locaux (ou LAN pour « Local Area Network »), ou entre réseaux privés virtuels (ou VPN pour « Virtual Private Network »), ou encore un accès au réseau Internet.

L'établissement de telles connexions nécessite l'utilisation de systèmes de gestion de connexion qui sont généralement complexes et coûteux à développer et introduisent des délais de transmission et un surdébit de trafic induit par l'échange de messages de signalisation pendant les phases d'établissement et de libération des connexions. De plus, le mode de transfert connecté expose le système de gestion à des problèmes de mise à l'échelle (ou « scalability »), puisque le nombre maximal de connexions qui peuvent être établies dépend des ressources disponibles.

En outre, le mode de transfert connecté est en inadéquation avec le caractère non connecté du protocole IP de l'Internet.

Afin d'améliorer la situation, il a été récemment proposé un mécanisme pour un réseau (ou une installation) de communications par satellite mettant en oeuvre un mode de transfert non connecté (ou datagramme) dédié IP. Dans ce réseau, l'échange de données s'effectue dans des bus logiques définis dans les liaisons satellite. Cela permet à des équipements de communication d'échanger des paquets de données sans avoir besoin d'établir une connexion au préalable. Mais, ce mode de fonctionnement impose aux terminaux satellite de fonctionner au niveau IP, c'est-à-dire selon le niveau trois du modèle en couches OSI. Il en résulte que les terminaux satellite doivent disposer de tables de routage et de protocoles de routage qui doivent être régulièrement mis à jour. De plus, il peut survenir des problèmes de transfert de paquets au niveau des interconnexions entre des réseaux de type IPv4 et IPv6. En outre, ce mode de fonctionnement interdit l'utilisation d'autres protocoles de transmission que le protocole IP.

Par conséquent, les réseaux de communications par satellite, connus, n'apportent pas une entière satisfaction.

L'invention a donc pour but d'améliorer la situation.

Elle propose à cet effet un dispositif dédié au traitement de trames de paquets de données pour des terminaux satellite d'un réseau de communications par satellite, disposant d'un identifiant de communication et raccordés à au moins un bus logique défini dans une liaison satellite.

On entend ici par « terminal satellite» un terminal satellite équipé d'un dispositif de traitement selon l'invention. Bien entendu, l'installation peut également comporter des terminaux satellite dépourvus d'un dispositif de traitement selon l'invention, mais ceux-ci ne sont pas concernés par l'invention.

Le dispositif de traitement se caractérise par le fait qu'il comporte des moyens de traitement chargés, lorsqu'ils reçoivent des paquets d'une trame de données (éventuellement segmentée), provenant d'un premier équipement de communication raccordé à un premier terminal couplé au dispositif, et destinée à un second équipement de communication raccordé à un second terminal, d'encapsuler chaque paquet reçu, dans un entête (ou « header ») de protocole de transmission de niveau deux (dans le modèle en couche OSI), comprenant au moins l'identifiant du bus logique auquel est raccordé le second terminal satellite et l'identifiant de communication du premier terminal satellite, avant qu'il ne soit transmis au satellite, via la liaison. Ainsi, les paquets encapsulés peuvent être extraits du bus logique, qui est désigné par l'identifiant qu'ils contiennent, par le second terminal satellite après avoir fait éventuellement l'objet d'une commutation de niveau deux par le satellite.

En d'autres termes, on utilise la capacité de diffusion (ou « broadcast ») naturelle des liaisons satellite pour les faire fonctionner comme un bus logique, par exemple de type ethernet, dans un réseau local (LAN). Les terminaux satellite, qui sont chacun couplé à (ou intègrent chacun) un dispositif de traitement selon l'invention, traitent l'acheminement des trames de données (par exemple de type Ethernet) en se basant sur les adresses physiques indiquées en tête de ces trames (par exemple les adresses Ethernet). Ils se comportent alors chacun comme un pont (ou « bridge ») logique. Ces ponts sont ici dits « logiques » car, coté liaison satellite, les terminaux satellite sont raccordés à des bus logiques et non à des bus physiques.

Le protocole de transmission de niveau deux est préférentiellement le protocole Ethernet, et ses dérivés, ou le protocole d'anneau à jetons (ou « token ring »), et ses dérivés.

Le dispositif de traitement selon l'invention pourra comporter d'autres caractéristiques complémentaires qui pourront être prises séparément et/ou en combinaison, et en particulier :
- une mémoire stockant au moins un identifiant de bus et les identifiants de communication (par exemple des adresses Ethernet) des équipements de communication raccordés au terminal satellite couplé au dispositif, ainsi qu'éventuellement ceux qui sont couplés à d'autres terminaux satellite. Dans ce cas, les moyens de traitement sont chargés de comparer l'identifiant de bus contenu dans l'entête de chaque paquet encapsulé qui circule dans le bus logique, auquel est raccordé le terminal couplé à leur dispositif, à l'identifiant de bus qui est stocké dans la mémoire. Puis, en cas d'identité entre ces identifiants de bus, les moyens de traitement sont chargés d'effectuer un filtrage portant sur l'identifiant de communication du second équipement, qui est contenu dans chaque paquet encapsulé,
- une mémoire stockant une table de correspondance entre des identifiants de communication d'équipements de communication et des identifiants de bus logique,
- le dispositif peut être implanté ou couplé à un terminal satellite raccordé à un équipement de communication permettant d'accéder à un réseau privé (virtuel) désigné par un numéro de port d'accès. Dans ce cas, le (ou l'un des) bus logique(s) est dédié au réseau privé (virtuel). Par ailleurs, la table stockée dans la mémoire établit alors une correspondance entre des identifiants de communication d'équipements de communication, des identifiants de port d'accès et des identifiants de bus logique,
- une table établissant une correspondance entre des identifiants de communication d'équipements de communication, d'éventuels identifiants de port d'accès et des identifiants de bus logique. Dans ce cas, lorsque, d'une première part, le satellite est de type multifaisceaux de manière à couvrir une multiplicité de zones, d'une deuxième part, le réseau privé est subdivisé en au moins deux portions implantées dans des zones couvertes par des faisceaux différents du satellite, et d'une troisième part, la liaison satellite définit un bus logique intra-faisceau dédié à chaque portion de réseau privé et un bus logique inter-faisceau dédié au réseau privé, alors les moyens de traitement sont préférentiellement chargés d'intégrer dans l'entête des paquets à transmettre l'identifiant du bus logique intra-faisceau ou inter-faisceau (auquel est raccordé le second terminal satellite destinataire des paquets encapsulés) et l'identifiant de communication du premier terminal satellite, de sorte que le satellite puisse assurer sa commutation de niveau deux à partir de l'identifiant de bus intra-faisceau ou inter-faisceau contenu dans l'entête des paquets encapsulés et du faisceau par lequel lui sont parvenus les paquets encapsulés. Par ailleurs, les moyens de traitement sont alors préférentiellement capables de comparer l'identifiant de bus intra-faisceau ou inter-faisceau, qui est contenu dans l'entête de chaque paquet encapsulé circulant dans l'un ou l'autre des bus logiques, aux identifiants de bus qui sont stockés dans la mémoire. Ainsi, en cas d'identité entre ces identifiants de bus, ils peuvent ensuite effectuer un filtrage portant sur l'adresse de communication du second équipement,
- une table établissant une correspondance entre des identifiants de communication d'équipements de communication, d'éventuels identifiants de port d'accès, des identifiants de bus logique, et des identifiants de faisceau. Dans ce cas, lorsque, d'une première part, le satellite est de type multifaisceaux, de manière à couvrir une multiplicité de zones, et à commutation de paquets, d'une deuxième part, le réseau privé est subdivisé en au moins deux portions implantées dans des zones couvertes par des faisceaux différents du satellite, désignés par des identifiants de faisceau, et d'une troisième part, la liaison satellite définit un bus logique inter-faisceau dédié au réseau privé, alors les moyens de traitement sont préférentiellement agencés pour intégrer dans l'entête des paquets à transmettre l'identifiant du bus logique inter-faisceau (auquel est raccordé le second terminal satellite destinataire des paquets), l'identifiant de communication du premier terminal satellite, et l'identifiant du faisceau qui couvre la zone dans laquelle est implanté le second terminal satellite. Ainsi, le satellite peut assurer sa commutation de paquets de niveau deux à partir de l'identifiant du faisceau qui est contenu dans l'entête des paquets encapsulés. Dans une variante dans laquelle le réseau privé est subdivisé en au moins deux portions implantées dans une zone couverte par l'un des faisceaux du satellite, désignés par des identifiants de faisceau, et la liaison satellite définit un bus logique intra-faisceau dédié au réseau privé, alors les moyens de traitement sont préférentiellement agencés pour intégrer dans l'entête des paquets à transmettre l'identifiant du bus logique intra-faisceau (auquel est raccordé le second terminal satellite destinataire des paquets), l'identifiant de communication du premier terminal satellite, et l'identifiant du faisceau qui couvre la zone dans laquelle est implanté le second terminal satellite,
- une table établissant une correspondance entre des identifiants de communication d'équipements de communication, d'éventuels identifiants de port d'accès, des identifiants de bus logique, et des identifiants de faisceau. Dans ce cas, lorsque, d'une première part, le satellite est de type multifaisceaux, de manière à couvrir une multiplicité de zones, et à commutation de circuits, d'une deuxième part, le réseau privé est subdivisé en au moins deux portions implantées dans des zones couvertes par des faisceaux différents du satellite, désignés par des identifiants de faisceau, et d'une troisième part, la liaison satellite définit un bus logique inter-faisceau dédié au réseau privé, alors les moyens de traitement sont préférentiellement agencés i) pour intégrer dans l'entête des paquets à transmettre l'identifiant du bus logique inter-faisceau (auquel est raccordé le second terminal satellite destinataire des trames) et l'identifiant de communication du premier terminal satellite, et ii) pour ordonner la transmission des paquets encapsulés dans un intervalle de temps (ou « time slot ») dédié au faisceau couvrant la zone dans laquelle est implanté le second terminal satellite. Ainsi, le satellite peut assurer sa commutation de circuits de niveau deux à partir de l'intervalle de temps de transmission des paquets encapsulés. Dans une variante dans laquelle le réseau privé est subdivisé en au moins deux portions implantées dans une zone couverte par l'un des faisceaux du satellite, et la liaison satellite définit un bus logique intra-faisceau dédié au réseau privé, alors les moyens de traitement sont préférentiellement agencés i) pour intégrer dans l'entête des paquets à transmettre l'identifiant du bus logique intra-faisceau (auquel est raccordé le second terminal satellite destinataire des trames) et l'identifiant de communication du premier terminal satellite, et ii) pour ordonner la transmission des paquets encapsulés dans un intervalle de temps (ou « time slot ») dédié au faisceau couvrant la zone dans laquelle est implanté le second terminal satellite,
- des moyens de traitement capables de comparer l'identifiant de bus inter-faisceau (ou intra-faisceau), contenu dans l'entête de chaque paquet encapsulé circulant dans le bus logique inter-faisceau (ou intra-faisceau), aux identifiants de bus qui sont stockés dans la mémoire, puis, en cas d'identité entre ces identifiants de bus, d'effectuer un filtrage portant sur l'adresse de communication du second équipement,
- des moyens de traitement capables de déterminer par auto-apprentissage des adresses de communication de premier et second équipements, et/ou des numéros de port correspondants et/ou des identifiants de bus logique correspondants et/ou des identifiants de faisceau correspondants, de manière à alimenter ladite table de correspondance,
- des moyens de traitement capables de générer des trames-requêtes destinées à un terminal satellite distant afin de déterminer des informations représentatives d'une adresse de communication de second équipement et/ou d'un numéro de port correspondant et/ou d'un identifiant de bus logique correspondant et/ou d'un identifiant de faisceau correspondant. Ils peuvent ainsi constituer l'entête des paquets à transmettre au second équipement, et renseigner la table de correspondance avec les informations obtenues. De même, les moyens de traitement sont capables, lorsqu'ils reçoivent des trames-requêtes, de transmettre des trames-réponses comportant les informations requises. De telles trames-requêtes et trames-réponses sont par exemple de type ARP (pour « Address Resolution Protocol », standard Internet).

L'invention porte également sur un terminal satellite équipé d'un dispositif de traitement du type de celui présenté ci-avant, ainsi que sur une installation de communications par satellite équipée de tels terminaux satellite.

Cette installation peut comporter un ou plusieurs réseaux privés raccordés chacun à un bus logique dédié. En variante ou en complément, l'installation peut comporter un réseau public de données, par exemple de type Internet/IP, raccordé à un bus logique public dédié. En présence, de réseau(x) locau(x) et d'un réseau de données, le bus logique public est également raccordé à l'un au moins des terminaux satellite primaires couplés à l'un des réseaux locaux.

Par ailleurs, l'installation peut comporter un satellite de type multifaisceaux de manière à couvrir une multiplicité de zones. Ce satellite peut assurer une commutation de circuits ou une commutation de paquets.

D'autres caractéristiques et avantages de l'invention apparaîtront à l'examen de la description détaillée ci-après, et des dessins annexés, sur lesquels :
- la figure 1 illustre de façon schématique un premier exemple de réalisation d'une installation de communications par satellite équipée de dispositifs de traitement selon l'invention,
- la figure 2 illustre de façon schématique une trame de paquets de données encapsulés, adaptée à l'installation de la figure 1,
- la figure 3 illustre de façon schématique un deuxième exemple de réalisation d'une installation de communications par satellite selon l'invention,
- la figure 4 illustre de façon schématique le mécanisme de transmission de paquets de données selon l'invention dans le cas de l'installation de la figure 3,
- la figure 5 illustre de façon schématique un troisième exemple de réalisation d'une installation de communications par satellite selon l'invention,
- la figure 6 illustre de façon schématique un quatrième exemple de réalisation d'une installation de communications par satellite selon l'invention,
- la figure 7 illustre de façon schématique un cinquième exemple de réalisation d'une installation de communications par satellite selon l'invention,
- la figure 8 illustre de façon schématique une trame ARP modifiée, adaptée à l'installation de la figure 7, et
- la figure 9 illustre de façon schématique les principales étapes d'une transmission de paquets de données encapsulés intégrant une phase de recherche d'informations d'adresse à l'aide de requêtes de type ARP.

Les dessins annexés pourront non seulement servir à compléter l'invention, mais aussi contribuer à sa définition, le cas échéant.

L'invention porte sur le transfert, au sein d'une installation de communications par satellite, de trames de paquets de données entre des équipements de communication raccordés à des terminaux satellite distants.

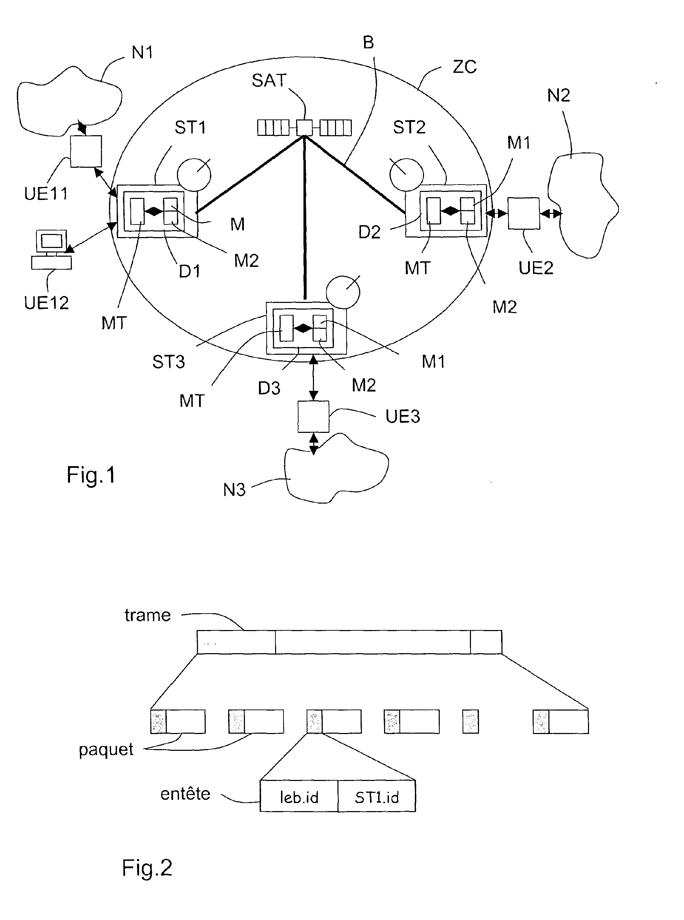

On se réfère tout d'abord aux figures 1 et 2 pour décrire un premier exemple de réalisation d'une installation de communications par satellite, selon l'invention.

Dans l'exemple illustré, l'installation comporte tout d'abord un satellite de communications SAT, offrant une zone de couverture ZC, et une multiplicité de terminaux satellite STi (ici i = 1 à 3, mais il peut prendre n'importe quelle valeur supérieure ou égale à deux (2)), couplés entre eux par des liaisons satellite passant par ledit satellite SAT.

Chaque terminal satellite STi est couplé à au moins un équipement de communication UEij.

On entend ici par « équipement de communication » (ci-après appelé équipement), tout équipement de réseau, et notamment les équipements d'utilisateurs, tels que les ordinateurs fixes ou portables, les téléphones fixes ou mobiles, les télécopieurs, les assistants numériques personnels (ou PDA pour « Personal Digital Assistant »), les serveurs, comme par exemple ceux appartenant à des fournisseurs de contenus (ou ASP pour « Application Service Provider »), les routeurs, ou les passerelles (ou « gateways »).

Dans l'exemple illustré, un premier terminal satellite ST1 est raccordé, d'une part, à un premier routeur UE11, lui même raccordé à un premier réseau local N1, et d'autre part, à des équipements d'utilisateurs UE12, comme par exemple des ordinateurs fixes ou portables.

Le premier réseau local N1 est par exemple un LAN (ou « Local Area Network »), agencé de manière à échanger des trames de données encapsulées selon le protocole de transmission ethernet, de niveau deux (ou « Data Link Layer ») selon le modèle en couches OSI. Mais, bien entendu, l'invention n'est pas limitée à ce seul protocole de transmission de niveau deux selon le modèle en couches OSI. D'une manière générale, l'invention s'applique à tous les types de protocole de niveau deux, et notamment aux protocoles 802.4, 802.5 et 802.11.

Par ailleurs, les équipements d'utilisateurs UE12 sont équipés de manière à pouvoir échanger avec le terminal satellite ST1 des trames de données encapsulées selon le protocole de transmission ethernet.

Toujours dans l'exemple illustré, un deuxième terminal satellite ST2 est raccordé à un deuxième routeur UE2, lui même raccordé à un deuxième réseau local N2. Ce deuxième réseau local N2 est par exemple agencé de manière à échanger des trames de données encapsulées selon le protocole de transmission ethernet. Par ailleurs, un troisième terminal satellite ST3 est raccordé à un deuxième routeur UE3, lui même raccordé à un troisième réseau local N3, agencé, par exemple, de manière à échanger des trames de données encapsulées selon le protocole de transmission ethernet.

Chaque terminal satellite STi est chargé, d'une part, de la transmission sur l'interface air du réseau satellitaire des trames de données qu'il reçoit au format ethernet d'un équipement UEi, après les avoir éventuellement segmentées en paquets de taille fixe ou variable pour les adapter au format de transmission du lien (ou de la liaison) satellite, et d'autre part, de la transmission à l'équipement UEi concerné des trames de données qu'il reçoit de l'interface air du réseau satellitaire après un éventuel réassemblage des paquets.

Comme on le verra plus loin, le terminal satellite STi, selon l'invention, assure une fonction de type « pontage » du fait que, ne traitant que le protocole de transmission ethernet (de niveau deux), il assure essentiellement la commutation du trafic en fonction des adresses physiques ethernet contenues dans les trames reçues d'un satellite SAT ou d'un équipement UEi. Une telle fonction de pontage ethernet est définie par la norme IEEE 802.1d. Elle permet de déterminer comment acheminer (ou « forward ») des trames vers leurs destinations respectives. A cet effet, chaque terminal satellite STi dispose d'une table d'acheminement habituellement renseignée par apprentissage, comme cela est défini dans la norme IEEE 802.1d.

Selon l'invention, la liaison satellite, établie entre les terminaux satellite STi et le satellite SAT, définit un ou plusieurs bus logiques B permettant la diffusion des trames encapsulées au format ethernet.

Préférentiellement, les bus sur l'interface satellite ne sont pas physiques, comme par exemple un bus physique Ethernet, mais logiques. Ils sont par conséquent chacun identifié par un identifiant logique. Les trames étant au format ethernet, on parle alors de bus ethernet logique.

Par ailleurs, chaque terminal satellite STi, selon l'invention, peut être assimilé à un pont logique ethernet assurant la commutation de niveau deux.

La transmission des trames au sein de l'installation selon l'invention s'effectue donc en mode non connecté, indépendamment d'éventuels autres protocoles de niveau supérieur utilisés. Les protocoles de niveau trois (IP) étant transparents entre terminaux satellite STi, la transmission inter-terminaux peut donc supporter tout protocole de niveau trois, par exemple IPv4, IPv6, PPP, PPPOE, etc...

On considère ici que chaque terminal satellite STi de l'installation est équipé d'un dispositif de traitement Di chargé d'assurer la fonction de pontage selon l'invention. On entend ici par « équipé », le fait d'intégrer un dispositif Di ou d'être raccordé directement à celui-ci, par exemple selon un mode dit « plug and play ».

Mais, l'invention n'est pas limitée aux installations qui ne comprennent que des terminaux satellite équipés d'un dispositif de traitement Di. L'invention s'applique en effet, également, aux installations comportant à la fois des terminaux satellite équipés d'un dispositif de traitement Di et des terminaux satellite dépourvus d'un dispositif de traitement Di. Dans ce qui suit, on désigne donc par terminal satellite, un terminal satellite équipé d'un dispositif Di.

Chaque dispositif de traitement Di, selon l'invention, comprend un module de traitement MT chargé, quand il reçoit des paquets d'une trame de données, éventuellement segmentée, provenant d'un (premier) équipement (ou équipement source) et destinée à un (second) équipement distant (ou équipement destinataire), d'encapsuler chaque paquet reçu dans un entête (ou « header ») de protocole de transmission de niveau deux, comprenant, comme illustré sur la figure 2, au moins l'identifiant du bus logique B ( leb.id), auquel est raccordé le terminal satellite STj couplé à l'équipement destinataire UEj, et l'identifiant de communication (par exemple l'adresse physique de communication) ST1.id du terminal satellite (source) ST1 qu'il équipe.

En d'autres termes, on vient ajouter au début de l'entête un champ d'identification du bus logique B dans lequel doivent être diffusées les trames ethernet encapsulées.

L'identifiant du bus logique n'étant pas fourni par l'équipement source UE, c'est le module de traitement MT du dispositif D qui doit le déterminer à partir de l'adresse physique de communication (adresse Ethernet) de l'équipement destinataire UE', qui est contenue dans les paquets provenant de l'équipement source UE. A cet effet, on prévoit une seconde mémoire M2 stockant une table établissant une correspondance entre des adresses (ou identifiants) de communication d'équipement de communication et des identifiants de bus logique. Cette seconde mémoire M2 est préférentiellement implantée dans le dispositif de traitement D, où elle est couplée au module de traitement MT. Ainsi, lorsque le module de traitement MT reçoit des paquets d'un équipement source, il lit l'adresse de communication de l'équipement destinataire, puis accède à la seconde mémoire M2 pour déterminer dans sa table de correspondance l'identifiant de bus leb.id qui lui est associé.

Lorsqu'un terminal satellite ST est couplé à des équipements de communication UE permettant d'accéder à un réseau privé virtuel (ou VPN pour « Virtual Private Network ») regroupant plusieurs réseaux locaux LAN, par exemple à protocole ethernet, la table de correspondance comprend également, de préférence, la correspondance entre les adresses physiques de communication des équipements et leur identifiant de port.

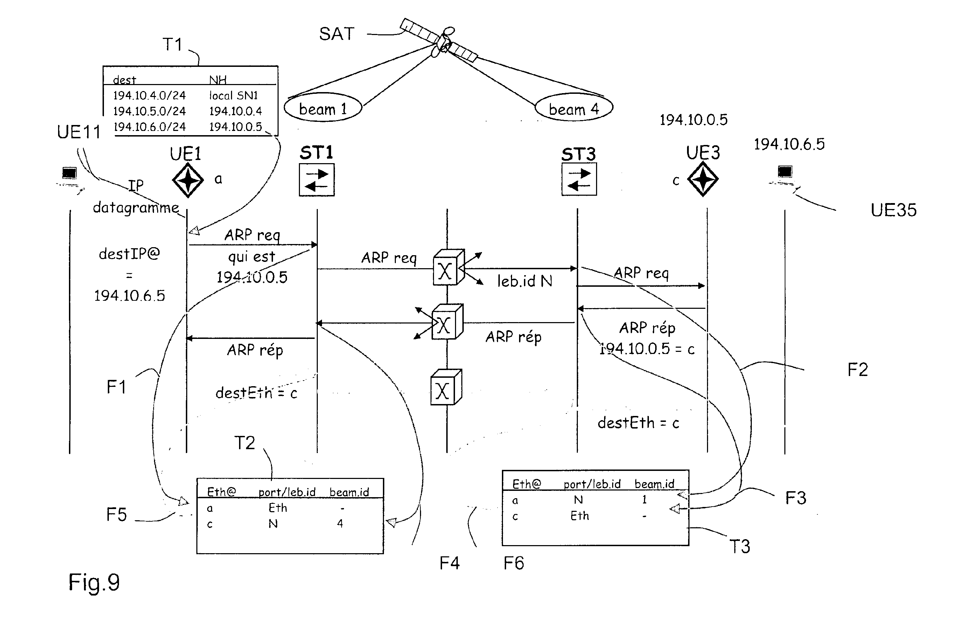

On reviendra plus loin, en référence à la figure 9, sur les différentes façons de renseigner la table de correspondance.

Une fois l'encapsulation effectuée, le module de traitement MT est chargé d'ordonner au module de transmission de son terminal satellite STi de transmettre les paquets encapsulés au satellite, via la liaison satellite.

Les paquets encapsulés sont ainsi intégrés dans des trames diffusées dans le bus logique B, de sorte que tous les terminaux satellite STi, qui sont raccordés à ce bus logique B, puissent « écouter » son trafic et déterminer par filtrage si les paquets encapsulés sont destinés à l'un des équipements UEi auxquels ils sont respectivement raccordés.

Ce filtrage est assuré par le module de traitement MT du dispositif Di. Il s'agit plus précisément d'un double filtrage. En effet, un premier filtrage F1 porte tout d'abord sur le contenu du champ d'identification du bus leb.id. Le module de traitement MT doit ici comparer le contenu leb.id de ce champ à une valeur stockée dans une première mémoire M1 et désignant le (ou les) bus logique(s) au(x)quel(s) le dispositif Di est couplé. Si le contenu de ce champ est différent de l'une des valeurs stockées (situation qui sera décrite plus loin et qui correspond à un multiplexage de bus logiques sur une même liaison satellite), alors le paquet encapsulé n'est pas retenu. En revanche, en cas d'identité, le module de traitement MT doit effectuer un second filtrage F2 portant sur l'adresse de communication de l'équipement destinataire, contenue dans les paquets filtrés selon les modalités de pontage (ou « bridging ») définies dans la norme IEEE 802.1d.

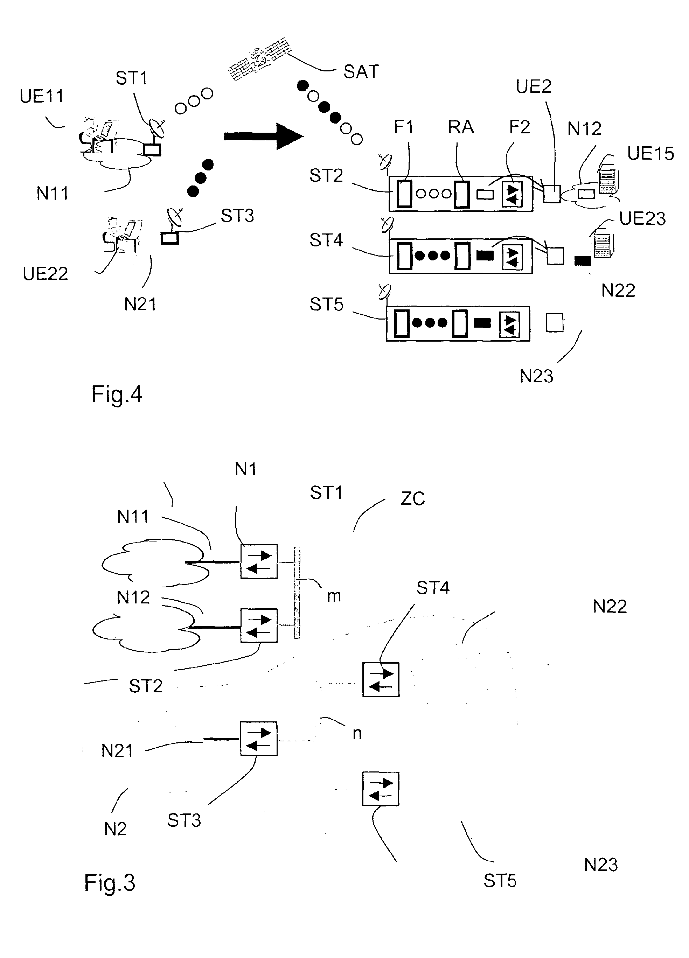

Ce double filtrage est illustré schématiquement sur la figure 4, dans le cas d'un multiplexage de deux bus logiques ethernet, d'identifiants respectifs leb.id = n et leb.id = m, sur une même liaison satellite. Plus précisément, dans cet exemple, qui correspond à un deuxième exemple de réalisation d'une installation selon l'invention (illustrée sur la figure 3), une première société dispose d'un premier réseau privé virtuel N1 dont un premier terminal satellite ST1 est raccordé à un premier sous-réseau N11 et un second terminal satellite ST2 est raccordé à un second sous-réseau N12, via un premier bus logique d'identifiant leb.id = m. Par ailleurs, une seconde société dispose d'un second réseau privé virtuel N2 connectant, via un second bus logique d'identifiant leb.id = n, un premier sous-réseau local N21, via un premier terminal satellite ST3, un deuxième sous-réseau local N22, via un deuxième terminal satellite ST4, et un troisième sous-réseau local N23, via un troisième terminal satellite ST5. Par exemple, les trois sous-réseaux N21, N22 et N23 correspondent à trois sites différents de la seconde société.

L'utilisateur de l'équipement UE11 du sous-réseau N11 souhaite ici transmettre des données à l'équipement UE15 du sous-réseau N12. L'équipement UE11 transmet alors une trame de paquets de données au terminal satellite ST1, comportant l'adresse de communication de l'équipement destinataire UE15.

Le module de traitement MT lit l'adresse de communication de l'équipement destinataire UE15, puis accède à la seconde mémoire M2 pour déterminer dans sa table de correspondance l'identifiant de bus leb.id qui lui est associé. On suppose ici que cette adresse est connue, ou au moins que l'adresse de l'équipement de communication UE2, permettant l'accès au sous-réseau N12 auquel appartient l'équipement UE15, est connue.

Le module de traitement MT du terminal satellite source ST1 intègre alors dans l'entête des paquets reçus l'identifiant ST1.id désignant le terminal satellite source ST1 et l'identifiant du bus logique leb.id = m auquel est raccordé le terminal satellite ST2 qui est couplé (indirectement) à l'équipement destinataire UE15 (ou UE2). Puis, il ordonne au module de transmission du terminal satellite ST2 de transmettre la trame ethernet au satellite SAT.

Les paquets encapsulés parviennent alors au niveau du satellite SAT qui les commute dans le premier bus logique m en fonction de leur champ leb.id = m. Les paquets diffusent dans le premier bus logique m et parviennent au niveau du terminal satellite ST2. Le module de traitement MT du dispositif D2 effectue alors son premier filtrage F1. Les paquets encapsulés, dont l'entête contient l'identifiant leb.id = m et l'identifiant ST1.id du terminal satellite source ST1, sont ensuite réassemblés RA, puis ils font l'objet d'un second filtrage F2 selon les modalités de pontage standards. En fait, le module de traitement MT ordonne ici que les paquets encapsulés soient commutés vers le routeur UE2 gérant l'accès au sous-réseau N12, lequel commute ensuite lesdits paquets vers l'équipement UE15.

Sensiblement dans le même temps, l'utilisateur de l'équipement UE21 du sous-réseau N21 souhaite ici transmettre des données à l'équipement UE23 du sous-réseau N22. L'équipement UE21 transmet alors une trame de données au terminal satellite source ST3, qui comporte l'adresse de communication de l'équipement destinataire UE23.

Le module de traitement MT lit l'adresse de communication de l'équipement destinataire, puis accède à la seconde mémoire M2 pour déterminer dans sa table de correspondance l'identifiant de bus leb.id qui lui est associé. On suppose ici que cette adresse est connue, ou au moins que l'adresse de l'équipement de communication UE4, permettant l'accès au sous-réseau N22 auquel appartient l'équipement UE23, est connue.

Le module de traitement MT du terminal satellite source ST3 intègre alors dans l'entête des paquets, issus éventuellement de la segmentation de la trame de données reçue, l'identifiant ST1.id désignant le terminal satellite source ST3 et l'identifiant du bus logique leb.id = n auquel est raccordé le terminal satellite destinataire ST4 qui est couplé (indirectement) à l'équipement destinataire UE23, via l'équipement UE4. Puis, il ordonne au module de transmission du terminal satellite ST3 de transmettre les paquets constituant la trame ethernet au satellite SAT.

Les paquets encapsulés parviennent alors au niveau du satellite SAT qui les commute dans le second bus logique n en fonction de son champ leb.id = n. Les paquets encapsulés diffusent dans le second bus logique n et parviennent au niveau du terminal satellite ST4. Le module de traitement MT du dispositif D4 effectue alors son premier filtrage F1. Les paquets encapsulés dont l'entête contient l'identifiant leb.id = n et l'identifiant ST1.id du terminal satellite source ST3 sont ensuite réassemblés RA pour reconstituer la trame d'origine, puis la trame reconstituée fait l'objet d'un second filtrage F2 selon les modalités de pontage standards.

Pendant ce temps, les paquets encapsulés, diffusés dans le second bus logique n, parviennent au niveau du terminal satellite ST5. Le module de traitement MT du dispositif D5 effectue alors son premier filtrage F1. Les paquets encapsulés dont l'entête contient l'identifiant leb.id = n et l'identifiant ST1.id sont ensuite réassemblés RA, puis la trame reconstituée fait l'objet d'un second filtrage F2 selon les modalités de pontage standards. Ici, le module de traitement MT s'aperçoit que l'adresse de l'équipement destinataire UE23, contenue dans la trame, ne correspond pas à l'une des adresses des équipements auxquels le terminal satellite ST5 est couplé. Par conséquent, la trame est supprimée.

Il est important de noter que la commutation effectuée par le satellite SAT peut être soit du type dit « à commutation de paquets », soit du type dit « à commutation de circuits ».

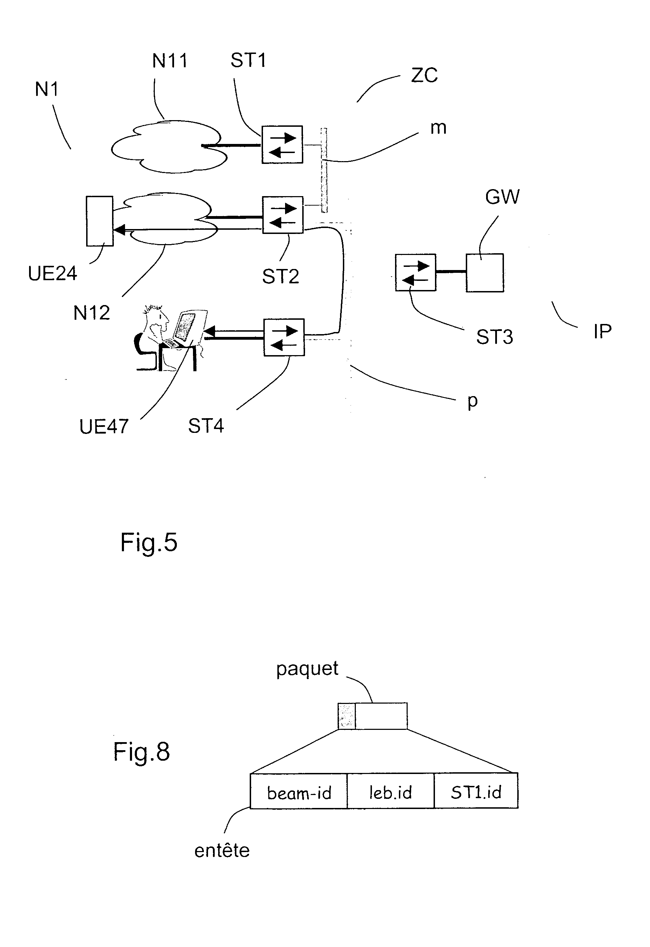

On se réfère maintenant à la figure 5 pour décrire un troisième exemple de réalisation d'installation selon l'invention.

Dans cet exemple de réalisation, le satellite n'offre toujours qu'une couverture mono faisceau. L'installation comprend ici un premier réseau privé N1, par exemple de type virtuel, décomposable en deux sous-réseaux locaux N11 et N12 raccordés chacun à un terminal satellite ST1, ST2. Ces deux terminaux satellite ST1 et ST2 sont raccordés l'un à l'autre via un premier bus logique privé m d'identifiant leb.id = m, défini via le satellite SAT. Par ailleurs, l'installation comporte également, d'une part, un troisième terminal satellite ST3 raccordé, par exemple via un équipement de communication de type passerelle (ou « gateway ») GW, à un réseau de données public de type internet/IP, et d'autre part, à un quatrième terminal satellite ST4 auquel sont raccordés des équipements d'utilisateurs UE. Ces deux terminaux satellite ST3 et ST4 sont raccordés l'un à l'autre via un second bus logique public p d'identifiant leb.id = p, défini via le satellite SAT, et auquel est également raccordé le terminal satellite ST2 du sous-réseau N12.

La mémoire M1 du dispositif D équipant la station ST2 stocke donc les valeurs m et p d'identifiants de bus, afin de pouvoir filtrer non seulement les paquets encapsulés circulant dans le premier bus logique privé m, mais également ceux circulant dans le second bus logique public p.

Par exemple, l'un des utilisateurs dont l'équipement UE47 est raccordé au terminal satellite ST4 souhaite échanger des données, selon le protocole IP, avec un équipement UE24 du sous-réseau N12. Il transmet alors au terminal satellite source ST4 des datagrammes IP comportant l'adresse de communication de l'équipement de communication destinataire UE24, qu'il a éventuellement récupérés précédemment dans le réseau IP, via le second bus logique public p. Le module de traitement MT lit l'adresse de communication de l'équipement destinataire, puis accède à la seconde mémoire M2 pour déterminer dans sa table de correspondance l'identifiant de bus leb.id qui lui est associé. Le module de traitement MT du dispositif D équipant le terminal satellite source ST4 intègre alors dans l'entête des paquets reçus l'identifiant ST1.id dudit terminal satellite source ST4 et l'identifiant du bus logique public leb.id = p auquel est raccordé le terminal satellite ST2 qui est couplé (indirectement) à l'équipement destinataire UE24. Puis, il ordonne au module de transmission du terminal satellite source ST4 de transmettre la trame ethernet au satellite SAT.

Les paquets encapsulés parviennent alors au niveau du satellite SAT qui les commutent dans le second bus logique public p en fonction de son champ leb.id = p. Les paquets encapsulés diffusent alors dans le second bus logique public p et parvient au niveau du terminal satellite ST2. Le module de traitement MT du dispositif D2 effectue alors son premier filtrage F1. La mémoire M1 du dispositif D2 du terminal ST2 contenant les valeurs m et p, tous les paquets encapsulés dont l'entête contient l'identifiant leb.id = p et l'identifiant ST1.id du terminal satellite source ST4 sont donc réassemblés RA, puis la trame reconstituée fait l'objet d'un second filtrage F2 selon les modalités de pontage standards. Le module de traitement MT vérifie que l'adresse de l'équipement destinataire UE24, contenue dans la trame reconstituée, correspond à l'une des adresses des équipements auxquels le terminal satellite ST2 est couplé. Cela étant le cas ici, le module de traitement MT ordonne au terminal satellite ST2 de commuter (au niveau deux) la trame reconstituée vers l'équipement destinataire UE24. En fait, il ordonne que cette trame reconstituée soit commutée vers le routeur UE2 gérant l'accès au sous-réseau N12, lequel commute ensuite lesdits paquets vers l'équipement UE24.

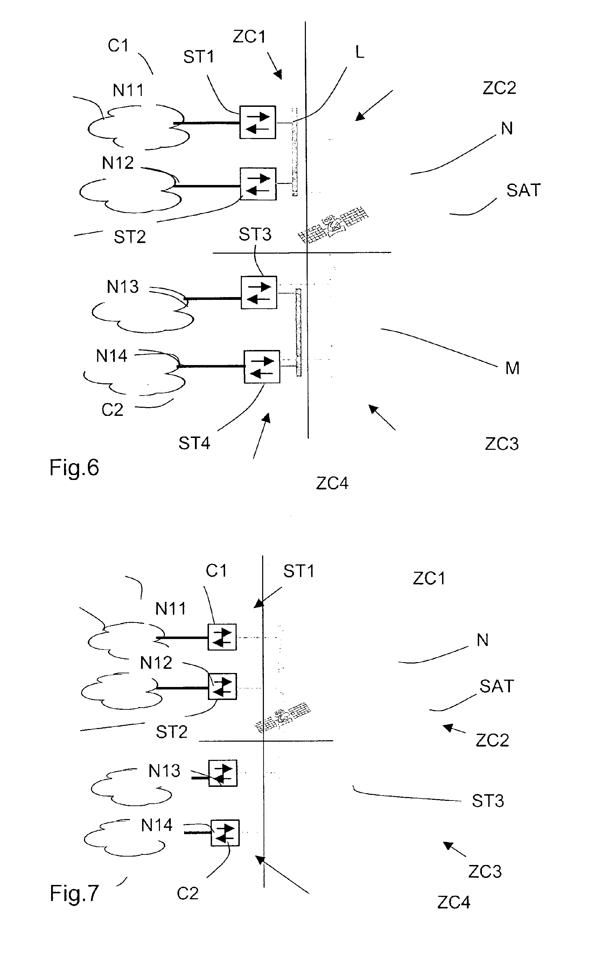

On se réfère maintenant à la figure 6 pour décrire un quatrième exemple de réalisation d'installation selon l'invention. Cet exemple correspond à une installation dans laquelle le satellite SAT est de type multifaisceaux, et par conséquent couvre une multiplicité de zones (ou « spots ») avec chacun de ses faisceaux.

Plus précisément, dans l'exemple illustré un réseau privé virtuel (VPN) N1 est réparti sur deux (ZC1 et ZC4) des quatre zones de couverture ZC1 à ZC4 du satellite SAT. Cette situation correspond, par exemple, à une entreprise possédant des filiales très éloignées les unes des autres, par exemple localisées sur des continents différents. Par exemple, un premier sous-réseau local N11 et un deuxième sous-réseau local N12, du réseau privé N1, sont implantés dans un premier continent C1 et sont chacun raccordé, via un équipement de communication UE (non représenté), à un terminal satellite ST1, ST2 implanté dans la première zone de couverture ZC1 du satellite SAT. De même, un troisième sous-réseau local N13 et un quatrième sous-réseau local N14, du réseau privé N1, sont implantés dans un second continent C2 et sont chacun raccordé, via un équipement de communication UE (non représenté), à un terminal satellite ST3, ST4 implanté dans la quatrième zone de couverture ZC4 du satellite SAT.

Les premier ST1 et deuxième ST2 terminaux satellite sont raccordés l'un à l'autre via un premier bus logique privé intra-faisceau L, d'identifiant leb.id = L. Les troisième ST3 et quatrième ST4 terminaux satellite sont raccordés l'un à l'autre via un second bus logique privé intra-faisceau M, d'identifiant leb.id = L. Chaque bus logique intra-faisceau est dédié à l'échange de données, par diffusion, entre sous-réseaux implantés dans une même zone. Par ailleurs, on définit également dans la liaison satellite un bus logique privé inter-faisceau N, d'identifiant leb.id = N, raccordé à chacun des terminaux satellite ST1 à ST4. Ce bus logique privé inter-faisceau N est dédié à l'échange de données entre des sous-réseaux implantés dans des zones distinctes.

Dans cet exemple de réalisation, c'est toujours le module de traitement MT du dispositif D qui lit l'adresse de communication de l'équipement destinataire, puis accède à la seconde mémoire M2 pour déterminer dans sa table de correspondance l'identifiant de bus leb.id qui lui est associé. Le module de traitement MT, du dispositif D équipant le terminal satellite source ST qui est couplé à l'équipement source UE, intègre donc dans l'entête des paquets reçus l'identifiant de communication ST1.id du terminal satellite source ST et l'identifiant du bus logique leb.id auquel est raccordé le terminal satellite ST' qui est couplé (indirectement) à l'équipement destinataire UE'.

Par ailleurs, dans cet exemple de réalisation, tout se passe comme si chaque terminal satellite ST1 à ST4 disposait de deux ports ethernet, chacun correspondant à l'un des deux bus logiques intra-faisceau et inter-faisceau auquel il est raccordé. Afin de pouvoir effectuer ses commutations, le satellite SAT comprend une mémoire dans laquelle se trouve stockée une table de correspondance définissant la zone destinatrice d'une trame encapsulée, compte tenu de la zone source et de l'identifiant de bus leb.id contenu dans l'entête des paquets de la trame. Grâce à cette table, le module de traitement MT d'un dispositif selon l'invention D n'a pas besoin de préciser explicitement dans l'entête le faisceau auquel est rattaché l'équipement destinataire.

Une telle table est donnée ci-dessous, à titre d'exemple illustratif :

| zone source | leb.id | zone destinatrice |
|---|---|---|
| 1 | L | 1 |
| 4 | M | 4 |
| 1 | N | 4 |
| 4 | N | 1 |

Par exemple, lorsque le satellite SAT reçoit de la quatrième zone ZC4 (zone source), sur son quatrième faisceau, des paquets dont l'entête désigne le bus ethernet intra-faisceau M, il déduit de la table de correspondance que la zone destinatrice est la quatrième zone ZC4. Il va donc commuter les paquets encapsulés vers le bus logique ethernet intra-faisceau M. Les paquets encapsulés diffusent alors dans le bus logique ethernet intra-faisceau M et peuvent être filtrés par les troisième ST3 et quatrième ST4 terminaux satellite, puis être transmis à l'équipement destinataire désigné dans l'entête des paquets encapsulés.

En revanche, si le satellite SAT reçoit de la quatrième zone ZC4 (zone source), sur son quatrième faisceau, des paquets dont l'entête désigne le bus logique ethernet inter-faisceau N, il déduit de la table de correspondance que la zone destinatrice est la première zone ZC1. Il va donc commuter les paquets encapsulés vers le bus logique ethernet inter-faisceau N. Les paquets encapsulés diffusent alors dans le bus logique ethernet inter-faisceau N et peuvent être filtrés par les premier ST1 et deuxième ST2 terminaux satellite, puis transmis à l'équipement destinataire désigné dans l'entête des paquets encapsulés.

On se réfère maintenant à la figure 7 pour décrire un cinquième exemple de réalisation d'installation selon l'invention. Il s'agit en fait d'une variante de l'installation de la figure 6, dans laquelle le satellite SAT est également de type multifaisceaux.

Plus précisément, dans l'exemple illustré le réseau privé virtuel (VPN) N1 est toujours réparti sur deux (ZC1 et ZC4) des quatre zones de couverture ZC1 à ZC4 du satellite SAT. Un premier sous-réseau local N11 et un deuxième sous-réseau local N12, du réseau privé N1, sont implantés dans un premier continent et sont chacun raccordé, via un équipement de communication UE (non représenté), à un terminal satellite ST1, ST2 implanté dans la première zone de couverture ZC1 du satellite SAT. De même, un troisième sous-réseau local N13 et un quatrième sous-réseau local N14, du réseau privé N1, sont implantés dans un second continent et sont chacun raccordé, via un équipement de communication UE (non représenté), à un terminal satellite ST3, ST4 implanté dans la quatrième zone de couverture ZC4 du satellite SAT.

Les quatre terminaux satellite ST1 à ST4 sont ici raccordés à un unique bus logique privé inter-faisceau N, d'identifiant leb.id = N. Cet unique bus N est dédié à l'échange de données, par diffusion, entre les sous-réseaux implantés dans une même zone ou dans des zones différentes.

Afin que le satellite SAT puisse effectuer ses commutations de niveau deux, le terminal satellite ST, qui est couplé à l'équipement source UE, doit indiquer au satellite SAT le faisceau auquel est rattaché l'équipement destinataire UE'. Pour ce faire, deux solutions peuvent être préférentiellement envisagées, selon le mode de commutation mis en oeuvre par le commutateur embarqué (ou OBP pour « On-Board Processor ») du satellite SAT.

Une première solution est adaptée aux OBPs du type dit « à commutation de paquets ». Cette solution consiste à intégrer dans l'entête des paquets à transmettre, à l'aide du module de traitement MT du dispositif D qui équipe le terminal satellite source ST couplé à l'équipement source, l'identifiant (beam.id) du faisceau auquel est rattaché l'équipement destinataire. Ce champ étant destiné au satellite SAT, et plus précisément à son OBP, il est, comme illustré sur la figure 8, placé dans l'entête des paquets.

L'identifiant du faisceau beam.id n'étant pas fourni par l'équipement source UE, c'est le module de traitement MT du dispositif D qui doit le déterminer à partir de l'adresse physique de communication de l'équipement destinataire UE' contenue dans les paquets reçus. A cet effet, la table de correspondance, que stocke le dispositif de traitement D dans sa seconde mémoire M2, établit la correspondance entre les adresses physiques des équipements de communication UE, les identifiants des faisceaux associés et les identifiants de bus logique associés. Ainsi, lorsque le module de traitement MT reçoit des paquets d'un équipement source, il lit l'adresse de communication de l'équipement destinataire UE', puis accède à la seconde mémoire M2 pour déterminer dans sa table de correspondance l'identifiant de bus leb.id et l'identifiant de faisceau beam.id qui lui sont associés.

Dans ce mode de réalisation, le satellite SAT doit donc être agencé de manière à pouvoir assurer ses commutations en fonction du champ d'identification du faisceau destinataire (beam.id).

Une seconde solution est adaptée aux OBPs du type dit « à commutation de circuits ». Cette solution correspondant à un mode de transmission des paquets encapsulés dans des intervalles de temps (ou « time slots ») réservés au faisceau couvrant la zone dans laquelle est implanté le terminal satellite destinataire ST' auquel est couplé l'équipement destinataire UE', il n'est donc pas nécessaire d'intégrer dans l'entête des paquets un champ d'identification de faisceau. L'intervalle de temps auquel appartient le paquet encapsulé désigne implicitement le faisceau qui doit être utilisé pour diffuser les paquets encapsulés vers le terminal satellite destinataire ST' auquel est couplé l'équipement destinataire UE'.

Ainsi, le satellite SAT peut assurer sa commutation de circuits de niveau deux à partir de l'intervalle de temps de transmission des paquets encapsulés.

Comme mentionné précédemment, les tables de correspondance qui sont stockées dans les secondes mémoires M2 des dispositifs selon l'invention Di, peuvent être renseignées de différentes façons.

Une première façon consiste à rafraîchir périodiquement toutes les secondes mémoires M2, en fonction des équipements de communication UE qui sont couplés à l'ensemble des terminaux satellite ST raccordés au terminal satellite équipé de leur dispositif de traitement D.

Une seconde façon, actuellement préférée, consiste à renseigner chaque seconde mémoire M2 par auto apprentissage à l'aide des informations contenues dans les trames reçues. Un tel mode de renseignement est illustré sur la figure 9, dans le cadre d'une procédure de transmission de données entre deux équipements distants.

Plus précisément, l'exemple illustré sur la figure 9 correspond à une installation, équipée d'un satellite multifaisceaux, du type de celle illustrée sur la figure 7. Par exemple, un utilisateur dont l'équipement UE11 est raccordé au sous-réseau local N11 souhaite transmettre des datagrammes IP à un autre utilisateur dont l'équipement (destinataire) UE35 est raccordé au sous-réseau local N13. Dans cet exemple, l'équipement UE11 connaît l'adresse internet de l'équipement destinataire UE35 (destlP@ = 194.10.6.5).

Les datagrammes sont donc transmis au routeur UE1 du sous-réseau local N11, qui est raccordé au terminal satellite ST1, accompagnés de l'adresse IP de l'équipement UE35. Le routeur UE1 dispose d'une table de routage T1 donnant la correspondance entre des adresses IP de destination (dest) et des adresses IP des routeurs qui le suivent (NH ou « Next Hop »). D'après la table T1 illustrée (en haut à gauche), le routeur suivant (NH=UE3), qui est associé à l'adresse destinataire IP destlP@ = 194.10.6.5, est 194.10.0.5.

Le routeur UE1 va donc adresser au terminal satellite source ST1 une trame-requête au format ethernet pour requérir du routeur UE3 (d'adresse IP 194.10.0.5) son adresse physique ethernet.

Préférentiellement, la trame-requête est de type ARP (pour « Address Resolution Protocol »).

Il est ici rappelé qu'une requête ARP est envoyée en mode de diffusion (ou « broadcast »), ce qui veut dire que l'adresse physique ethernet destinataire est remplacée par des données définissant une adresse broadcast, par exemple de type « FFFFFFFFFFFF hex ».

A réception de la trame-requête ARP, le terminal satellite source ST1 la communique au module de traitement MT de son dispositif D1, de sorte qu'il assure sa fonction de pontage (ou « bridge »). Le module de traitement MT stocke ensuite dans la table de correspondance T2 de la mémoire M2 l'adresse physique ethernet (Eth@ = a) du routeur UE1 (flèche F1), s'il ne la connaît pas déjà, en correspondance de son numéro de port ethernet (Eth). Puis, il intègre dans l'entête de la trame-requête (ARP req) l'identifiant du bus (leb.id = N) auquel est raccordé le routeur UE3, l'identifiant ST1.id du terminal satellite source ST1 et le numéro de faisceau (beam.id = 1) dans lequel se trouve ST1 et ordonne au module de transmission du terminal satellite source ST1 de la transmettre vers le satellite SAT. Etant donné que le terminal satellite source ST1 ne connaît pas encore le faisceau dans lequel se trouve le destinataire, il place dans le champ beam.id des paquets transmis une valeur particulière signifiant que le lesdits paquets doivent être diffusés. Ainsi, à réception de ces paquets, le satellite SAT les diffuse sur tous ces faisceaux.

Lorsque la trame-requête (ARP req) parvient au niveau du terminal satellite destinataire ST3, son module de traitement MT accède (flèche F2) à sa table de correspondance T3 pour la renseigner avec les informations reçues (si elle ne les contient pas encore). Ici, il fournit à la table T3 l'adresse de communication du routeur UE1 (Eth@ = a), son numéro de bus (leb.id = N) et son numéro de faisceau (beam.id = 1 ). Puis, le terminal satellite destinataire ST3 transmet la trame-requête (ARP req) au routeur UE3 auquel il est raccordé et qui le désigne. Le routeur UE3 renseigne alors sa propre table de correspondance avec les informations contenues dans la trame-requête (ARP req), puis il génère en retour une trame-réponse ARP indiquant que son adresse IP 194.10.0.5 correspond à son adresse ethernet c (Eth@ = c).

Cette trame-réponse (ARP rép) est transmise au terminal satellite ST3 qui la communique à son module de traitement MT, lequel accède (flèche F3) à sa table de correspondance T3 pour la renseigner avec les informations reçues (si elle ne les contient pas encore). Ici, il fournit à la table T3 l'adresse de communication du routeur UE3 (Eth@ = c) et son numéro de port (Eth). Puis, il intègre dans l'entête de la trame-réponse (ARP rép) le numéro de faisceau (beam.id = 4) du routeur UE3. Puis, il intègre dans l'entête des paquets l'identifiant de bus (leb.id = N) auquel est rattaché le destinataire (ici ST1) ainsi que le numéro de faisceau dans lequel il se trouve (beam.id = 1). Il obtient ces informations grâce à sa table T3. Il ordonne ensuite au terminal satellite ST3 de transmettre les paquets vers le satellite SAT.

A réception de ces paquets, le satellite SAT les diffuse sur le faisceau n°1.

Lorsque la trame-réponse (ARP rép) parvient au niveau du terminal satellite ST1 (après réassemblage des paquets), son module de traitement MT accède (flèche F4) à sa table de correspondance T2 pour la renseigner avec les informations reçues (si elle ne les contient pas encore). Ici, il fournit à la table T2 l'adresse de communication du routeur UE3 (Eth@ = c), son numéro de bus (leb.id = N) et son numéro de faisceau (beam.id = 4). Puis, le terminal satellite ST1 transmet la trame-réponse (ARP rép) au routeur UE1 auquel il est raccordé, après avoir enlevé les informations sur les identifiants de faisceau. Le routeur UE1 renseigne alors sa propre table de correspondance avec les informations contenues dans la trame-réponse (ARP rép). Puis, connaissant désormais l'adresse physique de l'équipement (ici UE3) auquel doivent être envoyés les paquets de données destinés à l'équipement destinataire UE35, il transmet lesdits paquets de données, accompagnés de l'adresse ethernet (destEth = c) du routeur UE3.

A réception de ces données, le module de traitement MT du terminal satellite source ST1 accède de nouveau à sa table de correspondance T2 (flèche F5) pour déterminer l'identifiant de bus (leb.id = N) et l'identifiant de faisceau (beam.id = 4) correspondant à l'adresse ethernet reçue (destEth = c). Il intègre alors dans l'entête des paquets l'identifiant ST1.id, l'identifiant de bus (leb.id = N) et l'identifiant de faisceau (beam.id = 4) extraits de la table T2, puis, ordonne au module de transmission du terminal satellite ST1 de transmettre les paquets encapsulés vers le satellite SAT. A réception de ces paquets encapsulés, le satellite SAT les diffuse vers le quatrième faisceau, désigné par leur entête, sur le bus logique ethernet N, également désigné par leur entête.

Lorsque les paquets encapsulés parviennent au niveau du terminal satellite destinataire ST3, ce dernier reconstitue la trame Ethernet et son module de traitement MT accède (flèche F6) à sa table de correspondance T3 pour déterminer le numéro de port (Eth) correspondant à l'adresse physique ethernet (destEth = c). Puis, le terminal satellite destinataire ST3 transmet la trame reconstituée au routeur UE3 auquel il est raccordé et qui est désigné par le numéro de port extrait de la table de correspondance T3. Le routeur UE3 peut alors réacheminer la trame de données à l'équipement destinataire UE35 dont l'adresse IP (destlP@ = 194.10.6.5) est contenue dans l'entête du datagramme IP transmis par la trame.

Le dispositif de traitement D, et principalement son module de traitement MT, ainsi qu'éventuellement ses mémoires M1 et M2, peuvent être réalisés sous la forme de circuits électroniques, de modules logiciels (ou informatiques), ou d'une combinaison de circuits et de logiciels.

Grâce à l'invention, la transmission des trames s'effectue en mode non connecté, indépendamment d'éventuels autres protocoles de transmission utilisés, et notamment des protocoles de niveau trois (tels que IPv4, IPv6 et PPP). Il n'y a donc plus à établir des connexions préalables. Par ailleurs, il n'est plus nécessaire de dupliquer le trafic à diffuser et les problèmes de mise à l'échelle (« scalability ») ne se posent plus.

De plus, la configuration de l'installation (ou réseau) est particulièrement simplifiée, du fait que, d'une première part, seuls quelques paramètres doivent être configurés dans chaque terminal satellite (sa propre adresse de communication, l'identifiant de chaque bus logique auquel il est raccordé et le numéro de faisceau dans lequel il se trouve), d'une deuxième part, l'ajout d'un terminal satellite dans l'installation ne requiert que la configuration du nouveau terminal satellite (les configurations respectives des autres terminaux satellite demeurant inchangées), et d'une troisième part, le retrait d'un terminal satellite de l'installation ne requiert pas la reconfiguration des autres terminaux satellite.

L'invention ne se limite pas aux modes de réalisation d'installation, de terminal satellite et de dispositif de traitement décrits ci-avant, seulement à titre d'exemple, mais elle englobe toutes les variantes que pourra envisager l'homme de l'art dans le cadre des revendications ci-après.

Ainsi, dans ce qui précède on a décrit une application au protocole de transmission de niveau deux Ethernet. Mais l'invention peut être utilisée avec d'autres protocoles de transmission de niveau deux, et notamment les protocoles 802.4, 802.5 et 802.11.

## Revendications

1. Dispositif (D) de traitement de trames de données pour des terminaux satellite (STi) d'un réseau satellitaire de communications, disposant d'un identifiant de communication et couplés à un satellite de communications (SAT) dudit réseau par une liaison satellite définissant au moins un bus logique (B), désigné par un identifiant, au moins deux desdits terminaux satellite (ST1,ST2) étant raccordés audit bus logique (B), **caractérisé en ce qu'**il comprend des moyens de traitement (MT) agencés, à réception de paquets d'une trame de données provenant d'un premier équipement de communication (UE1j), raccordé à un premier terminal satellite (ST1) couplé audit dispositif (D), et destinée à un second équipement de communication (UE2j), raccordé à un second terminal satellite (ST2), pour encapsuler chaque paquet reçu dans un entête de protocole de transmission de niveau deux, comprenant l'identifiant du bus auquel est raccordé ledit second terminal satellite (ST2) et l'identifiant de communication du premier terminal satellite (ST1 ), avant qu'il ne soit transmis audit satellite (SAT), via ladite liaison.

2. Dispositif selon la revendication 1, **caractérisé en ce qu'**un terminal satellite (ST) raccordé audit bus logique (B) constitue un pont logique de niveau deux.

3. Dispositif selon l'une des revendications 1 et 2, **caractérisé en ce qu'**il comprend une mémoire (M1) dans laquelle est stockée au moins un identifiant de bus et les identifiants de communication des équipements de communication raccordés au terminal satellite (ST1 ) couplé audit dispositif (D), et **en ce que** lesdits moyens de traitement (MT) sont agencés pour comparer l'identifiant de bus contenu dans l'entête de chaque paquet encapsulé circulant dans le bus logique (B) audit identifiant de bus stocké dans la mémoire (M1), puis en cas d'identité entre ces identifiants de bus, pour effectuer un filtrage (F2) portant sur l'adresse de communication du second équipement (UE2j).

4. Dispositif selon l'une des revendications 1 à 3, **caractérisé en ce qu'**il comprend une mémoire (M2) dans laquelle est stockée une table de correspondance entre des identifiants de communication d'équipements de communication et des identifiants de bus logique.

5. Dispositif selon l'une des revendications 1 à 4, **caractérisé en ce qu'**il est couplé à un terminal satellite (ST1) raccordé à un équipement de communication (UE1) permettant d'accéder à un réseau privé (N1) désigné par un numéro de port d'accès, et **en ce que** ledit bus logique (B) est dédié audit réseau privé (N1).

6. Dispositif selon la combinaison des revendications 4 et 5, **caractérisé en ce que** ladite table établit une correspondance entre des identifiants de communication d'équipements de communication, des identifiants de port d'accès et des identifiants de bus logique.

7. Dispositif selon l'une des revendications 4 à 6, **caractérisé en ce que**, ledit satellite (SAT) étant de type multifaisceaux de manière à couvrir une multiplicité de zones (ZC), ledit réseau privé (N1) étant subdivisé en au moins deux portions (N11, N12) implantées dans des zones (ZC1, ZC2) couvertes par des faisceaux différents dudit satellite (SAT), et ladite liaison satellite définissant un bus logique intra-faisceau dédié à chaque portion de réseau et un bus logique inter-faisceau dédié audit réseau privé (N1), lesdits moyens de traitement (MT) sont agencés pour intégrer dans l'entête de protocole de transmission de niveau deux des paquets à transmettre l'identifiant du bus logique intra-faisceau ou du bus logique inter-faisceau auxquels est raccordé le second terminal satellite (ST2) et l'identifiant de communication dudit premier terminal satellite (ST1) destinataire desdits paquets encapsulés, de sorte que ledit satellite (SAT) puisse assurer sa commutation de niveau deux à partir de l'identifiant de bus intra-faisceau ou inter-faisceau contenu dans l'entête des paquets encapsulés et du faisceau par lequel lui sont parvenus lesdits paquets encapsulés.

8. Dispositif selon la revendication 7, **caractérisé en ce que** lesdits moyens de traitement (MT) sont agencés pour comparer l'identifiant de bus intra-faisceau ou inter-faisceau contenu dans l'entête de chaque paquet encapsulé circulant dans l'un ou l'autre desdits bus logiques auxdits identifiants de bus stockés dans la mémoire (M1), puis en cas d'identité entre ces identifiants de bus, pour effectuer un filtrage (F2) portant sur l'adresse de communication du second équipement (UE2j).

9. Dispositif selon l'une des revendications 4 et 5, **caractérisé en ce que** ladite table établit une correspondance entre des identifiants de communication d'équipements de communication, des identifiants de port d'accès, des identifiants de bus logique, et des identifiants de faisceau, et **en ce que**, ledit satellite (SAT) étant de type multifaisceaux, de manière à couvrir une multiplicité de zones (ZC), et à commutation de paquets, ledit réseau privé (N1) étant subdivisé en au moins deux portions (N11, N12) implantées dans des zones couvertes par des faisceaux différents dudit satellite (SAT), désignés par des identifiants de faisceau, et ladite liaison satellite définissant un bus logique inter-faisceau dédié audit réseau privé (N1), lesdits moyens de traitement (MT) sont agencés i) pour intégrer dans l'entête de protocole de transmission de niveau deux des paquets à transmettre l'identifiant du bus logique inter-faisceau auquel est raccordé le second terminal satellite (ST2) destinataire desdits paquets, l'identifiant de communication dudit premier terminal satellite (ST1), et l'identifiant du faisceau couvrant la zone (ZC2) dans laquelle est implanté ledit second terminal satellite (ST2), de sorte que ledit satellite (SAT) puisse assurer sa commutation de paquets de niveau deux à partir dudit identifiant du faisceau contenu dans l'entête des paquets encapsulés.

10. Dispositif selon l'une des revendications 4 et 5, **caractérisé en ce que** ladite table établit une correspondance entre des identifiants de communication d'équipements de communication, des identifiants de port d'accès, des identifiants de bus logique, et des identifiants de faisceau, et **en ce que**, ledit satellite (SAT) étant de type multifaisceaux, de manière à couvrir une multiplicité de zones (ZC), et à commutation de circuits, ledit réseau privé (N1) étant subdivisé en au moins deux portions (N11, N12) implantées dans des zones (ZC1, ZC2) couvertes par des faisceaux différents dudit satellite (SAT), désignés par des identifiants de faisceau, et ladite liaison satellite définissant un bus logique inter-faisceau dédié audit réseau privé, lesdits moyens de traitement (MT) sont agencés i) pour intégrer dans l'entête de protocole de transmission de niveau deux des paquets à transmettre l'identifiant du bus logique inter-faisceau auquel est raccordé le second terminal satellite (ST2) destinataire desdits paquets et l'identifiant de communication dudit premier terminal satellite (ST1), et ii) pour ordonner la transmission desdits paquets encapsulés dans un intervalle de temps dédié audit faisceau couvrant la zone (ZC2) dans laquelle est implanté ledit second terminal satellite (ST2), de sorte que ledit satellite (SAT) puisse assurer sa commutation de circuits de niveau deux à partir de l'intervalle de temps de transmission des paquets encapsulés.

11. Dispositif selon l'une des revendications 9 et 10, **caractérisé en ce que** lesdits moyens de traitement (MT) sont agencés pour comparer l'identifiant de bus inter-faisceau contenu dans l'entête de chaque paquet encapsulé circulant dans ledit bus logique inter-faisceau auxdits identifiants de bus stockés dans la mémoire (M1), puis en cas d'identité entre ces identifiants de bus, pour effectuer un filtrage (F2) portant sur l'adresse de communication du second équipement (UE2j).

12. Dispositif selon l'une des revendications 4 et 5, **caractérisé en ce que** ladite table établit une correspondance entre des identifiants de communication d'équipements de communication, des identifiants de port d'accès, des identifiants de bus logique, et des identifiants de faisceau, et **en ce que**, ledit satellite (SAT) étant de type multifaisceaux, de manière à couvrir une multiplicité de zones (ZC), et à commutation de paquets, ledit réseau privé (N1) étant subdivisé en au moins deux portions (N11, N12) implantées dans des zones couvertes par l'un des faisceaux dudit satellite (SAT), désignés par des identifiants de faisceau, et ladite liaison satellite définissant un bus logique intra-faisceau dédié audit réseau privé (N1), lesdits moyens de traitement (MT) sont agencés i) pour intégrer dans l'entête de protocole de transmission de niveau deux des paquets à transmettre l'identifiant du bus logique intra-faisceau, l'identifiant de communication dudit premier terminal satellite (ST1), et l'identifiant du faisceau couvrant la zone (ZC) dans laquelle est implanté ledit second terminal satellite (ST2) destinataire desdits paquets, de sorte que ledit satellite (SAT) puisse assurer sa commutation de paquets de niveau deux à partir dudit identifiant du faisceau contenu dans l'entête des paquets encapsulés.

13. Dispositif selon l'une des revendications 4 et 5, **caractérisé en ce que** ladite table établit une correspondance entre des identifiants de communication d'équipements de communication, des identifiants de port d'accès, des identifiants de bus logique, et des identifiants de faisceau, et **en ce que**, ledit satellite (SAT) étant de type multifaisceaux, de manière à couvrir une multiplicité de zones (ZC), et à commutation de circuits, ledit réseau privé (N1) étant subdivisé en au moins deux portions (N11, N12) implantées dans une zone (ZC) couverte par l'un desdits faisceaux dudit satellite (SAT), désignés par des identifiants de faisceau, et ladite liaison satellite définissant un bus logique intra-faisceau dédié audit réseau privé, lesdits moyens de traitement (MT) sont agencés i) pour intégrer dans l'entête de protocole de transmission de niveau deux des paquets à transmettre l'identifiant du bus logique intra-faisceau auquel est raccordé le terminal satellite (ST1) et l'identifiant de communication dudit premier terminal satellite (ST1), et ii) pour ordonner la transmission desdits paquets encapsulés dans un intervalle de temps dédié audit faisceau couvrant la zone (ZC) dans laquelle est implanté ledit second terminal satellite (ST2) destinataire desdits paquets, de sorte que ledit satellite (SAT) puisse assurer sa commutation de circuits de niveau deux à partir de l'intervalle de temps de transmission des paquets encapsulés.

14. Dispositif selon l'une des revendications 13 et 14, **caractérisé en ce que** lesdits moyens de traitement (MT) sont agencés pour comparer l'identifiant de bus intra-faisceau contenu dans l'entête de chaque paquet encapsulé circulant dans ledit bus logique intra-faisceau auxdits identifiants de bus stockés dans la mémoire (M1), puis en cas d'identité entre ces identifiants de bus, pour effectuer un filtrage (F2) portant sur l'adresse de communication du second équipement (UE2j).

15. Dispositif selon l'une des revendications 2 à 14, **caractérisé en ce que** lesdits moyens de traitement (MT) sont agencés pour déterminer par auto-apprentissage des adresses de communication de premier et second équipements (UEij), et/ou des numéros de port correspondants et/ou des identifiants de bus logique correspondants et/ou des identifiants de faisceau correspondants, de manière à alimenter ladite table de correspondance.

16. Dispositif selon l'une des revendications 2 à 15, **caractérisé en ce que** lesdits moyens de traitement (MT) sont agencés pour transmettre des trames-requêtes à un terminal satellite (ST2) distant pour déterminer des informations représentatives d'une adresse de communication de second équipement (UE2j) et/ou d'un numéro de port correspondant et/ou d'un identifiant de bus logique correspondant et/ou d'un identifiant de faisceau correspondant, de manière à pouvoir constituer l'entête des paquets à transmettre audit second équipement (UE2j), puis pour alimenter ladite table de correspondance avec lesdites informations obtenues.

17. Dispositif selon la revendication 16, **caractérisé en ce que** lesdits moyens de traitement (MT) sont agencés, à réception desdites trames-requêtes pour transmettre des trames-réponses comportant lesdites informations requises.

18. Dispositif selon l'une des revendications 16 et 17, **caractérisé en ce que** chaque trame-requête et chaque trame-réponse est de type ARP.

19. Dispositif selon l'une des revendications 1 à 18, **caractérisé en ce que** ledit protocole de transmission de niveau deux est choisi parmi le protocole Ethernet et le protocole d'anneau à jetons (« token ring »).

20. Terminal satellite primaire (STi), **caractérisé en ce qu'**il comprend un dispositif (Di) selon l'une des revendications précédentes.

21. Installation de communications munie d'au moins un satellite de communications (SAT), **caractérisée en ce qu'**elle comprend une multiplicité de terminaux satellite primaires (STi) selon la revendication 20.

22. Installation selon la revendication 21, **caractérisée en ce qu'**au moins deux desdits terminaux satellite primaires (ST1, ST2) sont chacun raccordé à un équipement de communication (UE11, UE12) permettant d'accéder à un réseau privé (N1), et sont raccordés à un premier bus logique dédié audit réseau privé (N1).

23. Installation selon la revendication 22, **caractérisée en ce qu'**au moins deux desdits terminaux satellite primaires (ST3, ST4) sont chacun raccordé à un équipement de communication (UE21, UE22) permettant d'accéder à un autre réseau privé (N2), et sont raccordés à un autre bus logique dédié audit second réseau privé (N2).

24. Installation selon l'une des revendications 22 et 23, **caractérisée en ce que** l'un au moins desdits réseaux privés (N1, N2) est de type virtuel.

25. Installation selon l'une des revendications 22 à 24, **caractérisée en ce que** l'un au moins des terminaux satellite primaires est raccordé à un équipement de communication (GW) permettant d'accéder à un réseau public de données (IP) et au moins l'un desdits terminaux satellite primaires est raccordé à un équipement de communication (UEij) permettant d'accéder à l'un desdits réseaux privés (N1, N2), ces terminaux satellite étant raccordés à un bus logique dédié audit réseau public (IP) de données et permettant l'accès audit réseau privé (N1, N2).

26. Installation selon l'une des revendications 21 à 25, **caractérisée en ce que** ledit satellite (SAT) est de type multifaisceaux de manière à couvrir une multiplicité de zones.

27. Installation selon la revendication 26, **caractérisée en ce que** ledit réseau privé (N1, N2) est subdivisé en au moins deux portions (N11,N12 ;N21,N22) implantées dans des zones couvertes par des faisceaux différents dudit satellite (SAT), **en ce que** ladite liaison satellite définit un bus logique intra-faisceau dédié à chaque portion de réseau et un bus logique inter-faisceau dédié audit réseau privé (N1,N2), **en ce que** ledit satellite (SAT) est agencé pour assurer sa commutation de niveau deux à partir dudit identifiant de bus intra-faisceau ou inter-faisceau contenu dans les paquets encapsulés à transmettre, et **en ce que** lesdits terminaux satellite primaires (STi), couplés auxdites portions de réseau, sont agencés pour filtrer l'identifiant de bus intra-faisceau de leur portion de réseau et l'identifiant de bus inter-faisceau.

28. Installation selon la revendication 26, **caractérisée en ce que** ledit réseau privé (N1, N2) est subdivisé en au moins deux portions (N11,N12 ;N21,N22) implantées dans des zones couvertes par des faisceaux différents dudit satellite (SAT), chaque zone étant associée à un identifiant de faisceau, **en ce que** ladite liaison satellite définit un bus logique inter-faisceau dédié auxdites portions de réseau, **en ce que** ledit satellite (SAT) est agencé pour assurer une commutation de paquets de niveau deux à partir de l'identifiant de faisceau et de l'identifiant de bus inter-faisceau contenus dans les paquets encapsulés à transmettre, et **en ce que** lesdits terminaux satellite primaires (STi) couplés auxdites portions de réseau sont agencés pour filtrer l'identifiant de bus inter-faisceau.

29. Installation selon la revendication 26, **caractérisée en ce que** ledit réseau privé (N1, N2) est subdivisé en au moins deux portions (N11,N12 ;N21,N22) implantées dans des zones couvertes par des faisceaux différents dudit satellite, chaque zone étant associée à un identifiant de faisceau, **en ce que** ladite liaison satellite définit un bus logique inter-faisceau dédié auxdites portions de réseau, **en ce que** ledit satellite (SAT) est agencé pour assurer une commutation de circuits de niveau deux à partir de l'intervalle de temps de transmission desdits paquets encapsulés et de l'identifiant de bus inter-faisceau contenu dans lesdits paquets encapsulés à transmettre, et **en ce que** lesdits terminaux satellite primaires (STi) couplés auxdites portions de réseau sont agencés pour filtrer l'identifiant de bus inter-faisceau.
